# EUROPEAN PATENT APPLICATION

(11) **EP 1 413 955 A2**
(43) Date of publication of application: **28.04.2004**
(21) Application number: 03023870.3
(22) Date of filing: 21.10.2003
(51) Int. Cl.: G06F 9/46

(54) **Three tier architecture for a computer system**

(30) Priority: 25.10.2002 JP 2002311919
(71) Applicant: Crypt Software Inc., Kashiwazaki-shi, Niigata (JP)
(72) Inventor: Yanagi, Masae, Kashiwazaki-shi Niigata (JP)
(74) Representative: HOFFMANN - EITLE

(57) **Abstract**

To provide a data processing system, a processing apparatus and a computer program for dispersing the loads imposed on units constituting the system in a data base system to enhance a security of the data, a processing unit for recording an applied program, an access unit for accessing a recording medium REC recording data, and a command unit for sending a command for processing the data are independent of each other, if the recording medium REC may be accessed from the access unit, information such as position information for indicating the recording position of the data is sent to the processing unit, a command including a program identifying information for identifying the applied program is sent from the command unit to the processing unit, the data recorded in the recording position indicated by the position information are extracted on the basis of the command received in the processing unit and are processed by an applied program identified by a program identifying information.

## Description

### BACKGROUND OF THE INVENTION

### FIELD OF THE INVENTION

The present invention relates to a data processing system for executing a program in accordance with a command and processing data, a processing apparatus used in the system and a computer program for realizing the apparatus, and more particularly to a data processing system, a processing apparatus and a computer program for enhancing security of the data.

### DESCRIPTION OF THE RELATED ART

A stand-alone system, a server-client system and a host-guest system are provided as a large-scale data processing system for executing an applied program operating on a base program and processing data by using a computer.

The stand-alone system means a system for processing an applied program and data by using a single computer.

The server-client system means a system composed of a plurality of computers kept in a relationship of a server computer for providing a service and a client computer utilizing the service. Although, in some cases, the data per se are auxiliarily controlled by the client computer side, both the applied program and data are basically concentratedly controlled by the server computer.

The host-guest system means a system composed of a plurality of computers in a relationship of a host computer for concentratingly controlling the system as a main part of the process and a guest computer (terminal device) serving as a man-machine interface of the host computer. All the applied program, the data and the process and input/output of the data are controlled by the host computer.

Sine, in those data processing systems, the data are concentrated and controlled, the applied program and data are used in an integral manner so that a mutual dependency of the applied program and data is enhanced.

By the way, some publication discloses an invention for an inherent data owner to control the data (see, for example, patent publication 1).

### Patent Publication 1

Japanese Patent Application Laid-Open No. 2002-207627

However, in a conventional data processing system, since the data are concentrated and controlled, a system controlling person for controlling the overall data processing system also executes the control of the data. Therefore, there is a problem in the security of the data.

Also, the data are concentrated and controlled so that the data to be controlled are increased, which leads to an increase of a running cost such as cost for increasing the installation or equipment.

Incidentally, the patent publication 1 discloses the invention for the inherent data owner to control the data but the mutual dependency of the applied program and data is still high and it is necessary to develop the applied program that is suitable for each entity for controlling the data and to establish the data processing system, which causes the increase of the development cost.

In view of the foregoing defects, an object of the present invention is to provide a data processing system, a processing apparatus used in the system and a computer program for realizing the apparatus, in which a processing unit for recording an applied program, an access unit for accessing a recording medium recording data, and a command unit for sending a command for processing the data are independent of each other, if the recording medium may be accessed from the access unit, information such as position information for indicating the recording position of the data is sent to the processing unit, a command including a program identifying information for identifying the applied program is sent from the command unit to the processing unit, the data recorded in the recording position indicated by the position information are extracted on the basis of the command received in the processing unit and are processed by an applied program identified by a program identifying information so that the data are controlled by a data owner for controlling the recording medium whereby security of the data is enhanced, an increase of running cost due to the increase of the data is prevented, and a mutual dependency on the applied program and the data is low to thereby suppress development cost to facilitate another use of the applied program.

Furthermore, according to the present invention, since the data having the security such as individual information are not recorded in the processing unit, another object of the invention is provide a data processing system or the like, in which, even if the applied program is laid open, there is no possibility of leakage of the data, it is possible to enhance the reuse and circulation of the applied program, and the owner of the data may confirm the contents of the applied program to thereby make it possible to enhance transparency of the use of the data.

Furthermore, according to the present invention, since the data readout is possible only when the recording medium is loaded on the access unit, still another object of the present invention is to provide a data processing system or the like in which the leakage, false and wanton use may be prevented.

Then, still another object of the present invention is to provide a data processing system or the like in which, by using a related program for judging whether or not a person has an accessible right to the data recorded in the designated recording medium, the setup of the accessible right person is performed by the command or the like whereby the data owner for controlling the recording medium may set the accessible right in an easy way to thereby make it possible to enhance the flexibility relating to the use of the system.

According to a first aspect of the invention, there is provided a data processing system for executing a program on the basis of a command and processing data, comprise a command unit for sending the command; a processing unit for recording a program; and an access unit for accessing a recording medium recording the data, wherein said access unit includes means for sending to said processing unit position information indicating a recording position of the data recorded in the recording medium, said command unit includes means for sending to said processing unit a command including program identifying information for identifying the program, and said processing unit includes: means for requiring a feed of the data caused, in advance, to correspond to the program identifying information included in the command received from said command unit and recorded in the recording position indicated by the position information received from said access unit; and means for executing the program identified by the program identifying information included in the command received from the command unit and processing the data received as required.

In the data processing system according to the first aspect of the invention, the command unit, the processing unit and the access unit are independent of each other whereby the data that are an object to be processed is controlled by the inherent data owner rather than the system controlling person. Accordingly, it is possible to enhance the security of the data. Also, since it is unnecessary to control the data by the processing unit recording the program, the load of each unit is dispersed and it is unnecessary to invest the cost to the installation due to the increase of the data to thereby make it possible to reduce the running cost.

According to a second aspect of the invention, there is provided a data processing system for executing a program on the basis of a command and processing data, comprising: a command unit for sending the command; a processing unit for recording a program; and an access unit for accessing a recording medium recording the data, wherein said access unit includes means for sending to said processing unit inventory information including data identifying information for identifying and position information indicating a recording position of the data recorded in the recording medium, said command unit includes means for sending to said processing unit a command including program identifying information for identifying the program and information used for identifying the data, said processing unit includes: a data table for recording the data identifying information and the position information caused to correspond to each other; a first program table for recording the data identifying information of the data related to the process of the program in association with the program identifying information; a second program table for recording the program in association with the program identifying information; means for recording to said data table the position information and the data identifying information included in the inventory information received from said access unit; means for extracting from the data table the position information corresponding to the information used for identifying the data and the data identifying information on the basis of the information used for identifying the data included in the command and the data identifying information recorded to the first program table in associated with the program identifying information included in the command received from said command unit; and means for sending to said access unit data requirement for requiring a feed of the data recorded in the recording position indicated by the extracted position information, said access unit further includes: means for reading the data from the recording medium on the basis of the data requirement received; and means for sending the read data to said processing unit, and said processing unit further includes: means for extracting from the second program table the program identified by the program identifying information included in the command received from said command unit; and means for executing the extracted program and processing the data received from said access unit.

In the data processing system according to the second aspect of the invention, the command unit, the processing unit and the access unit are independent of each other whereby the data that are an object to be processed is controlled by the inherent data owner rather than the system controlling person. Accordingly, it is possible to enhance the security of the data. Also, since it is unnecessary to control the data by the processing unit recording the program, the load of each unit is dispersed and it is unnecessary to invest the cost to the installation due to the increase of the data to thereby make it possible to reduce the running cost.

Furthermore, only the program recorded in the second program table and the data identifying information of the data related to the process recorded in the first program table are recorded in the processing unit, and the input data required to execute the program and the recording position thereof, the output data that are the result of the execution and the recording position thereof and the data to be processed in the program such as contents of the data and the purpose of the process are designated by the command. Accordingly, it is possible to simultaneously use the program for various purposes decided by the command. Also, since the mutual dependency between the program and the data is low, it is possible to apply the program with each to another system to thereby make it reduce the cost for developing the special program.

Then, since the data having the security such as individual information are not recorded in the processing unit, it is possible to lay open the contents of the program and to accelerate the use of the system.

In a data processing system according to a third aspect of the invention, in the second aspect of the invention, the inventory information sent from said access unit includes an owner identifying information for identifying an owner of the data, the information used for identifying the data included in the command sent from said command unit is an owner identifying information, and the position information, the data identifying information and the owner identifying information included in the inventory information is recorded on said data table.

In the data processing system according to the third aspect of the invention, the owner identifying information is used as the information for identifying the data so that the right for owning or processing the data may be clarified. Furthermore, only if the data identifying information and the owner identifying information recorded in the data table, the data identifying information and the program identifying information recorded in the first program table, and the owner identifying information and the program identifying information included in the command are all prepared, the program to be executed and the used data are determined to thereby make it possible to enhance the reliability and security of the data.

In the data processing system according to a fourth aspect of the invention in the second or the third aspect of the invention, the data identifying information to be assigned to the data that are a result from the execution of the program is recorded in said first program table in correspondence with the program identifying information, said processing unit further includes means for sending to said access unit the data that are the result of the execution of the program and the data identifying information to be assigned to the data on the basis of the first program table, and said access unit further includes means for recording the received data and the data identifying information to the recording medium.

In the data processing system according to the fourth aspect of the invention, not only the input data that are the data to be processed by the program but also the output data that are the result of the execution of the program are determined in the first program table in advance. As a result, it is unnecessary to perform by the program the process required to control the data, such as the determination of the recipient of the output of the data and the recording. It is possible to change the method of controlling the data by changing the first program table without changing the program to thereby lower the mutual dependency between the program and the data and it is possible to easily apply the program to another data processing system to make it possible to suppress the increase of the development cost.

Furthermore, the output data that are the result of the execution of the program is fed from the processing unit to the access unit and recorded on the recording medium by the access unit so that the data owner may control the data on the recording medium to be controlled at one site and the security of the data may be enhanced.

In the data processing system according to a fifth aspect of the invention, in any one of the first to fourth aspects, a related program identifying information for identifying a related program to be executed in relation with the program is recorded in the second program table in correspondence with the program identifying information and the program, and the related program is a program for judging the absence/presence of the limit of the execution of the corresponding program.

In the data processing system according to the fifth aspect of the invention, before the execution of the program, the process for judging the absence/presence of the right to access the data and the right to execute the program is executed as the related program to make it possible to prevent the output and the operation of the data in an ill manner and to enhance the safety factor.

Furthermore, for example, the related program for judging whether or not the person has a right having the right to the data recorded in the recording medium assigned is used to make it possible for the data owner controlling the recording medium to easily set the access right and to expand the reliability relating to the use of the system.

In the data processing system according to a sixth aspect of the invention, in any one of the first to fifth aspects, the data recorded to the recording medium are ciphered data and said processing unit further includes: means for ciphering the data; and means for deciphering the ciphered data.

According to the sixth aspect of the invention, the data recorded on the recording medium are ciphered and the data is deciphered by the processing unit to make it possible for the data owner controlling the data or the person who gets the recording medium to be prevented from using the data in an ill manner or falsifying the data, thereby increasing the reliability of the data.

According to a seventh aspect of the invention, there is provided a data processing apparatus for executing a program on the basis of a command and processing data, provided with means for communicating with another apparatus, comprising: means for receiving position information for indicating a recording position of the data; means for receiving a command including program identifying information for identifying the program; means for requiring a feed of the data caused, in advance, to correspond to the program identifying information included in the command received and recorded in the recording position indicated by the position information received; and means for executing the program identified by the program identifying information included in the command received and processing the data received as required.

In the data processing apparatus according to the seventh aspect of the invention, the processing unit is independent of the command unit for sending the command and the access unit for accessing the data whereby the data that are an object to be processed is controlled by the inherent data owner rather than the system controlling person. Accordingly, it is possible to enhance the security of the data. Also, since it is unnecessary to control the data by the processing unit recording the program, there is no need to invest the cost to the installation due to the increase of the data to thereby make it possible to reduce the running cost.

According to an eighth aspect of the invention, there is provided a computer program for executing a program on the basis of a command and processing data, for a computer provided with means for communicating with another apparatus, comprising the following steps: if position information indicating a recording position of the data is received and furthermore, the command including program identifying information for identifying the program is received to the computer, requiring a feed of the data caused, in advance, to correspond to the program identifying information included in the command received and recorded in the recording position indicated by the position information received; and executing the program identified by the program identifying information included in the command received and processing the data received as required.

In the computer program according to the eighth aspect of the invention, executed by a computer such as a server computer, the computer is operated as the processing unit and is caused to be independent of the access unit accessing the data and the command unit for sending the command, whereby the data that are an object to be processed is controlled by the inherent data owner rather than the system controlling person. Accordingly, it is possible to enhance the security of the data. Also, since it is unnecessary to control the data by the processing unit recording the program, there is no need to invest the cost to the installation due to the increase of the data to thereby make it possible to reduce the running cost.

### BRIEF DESCRIPTION OF THE DRAWINGS

Fig. 1 is a block diagram showing a structure of a data processing system according to the invention.
Fig. 2 is a schematic illustration showing recorded contents of data of a recording medium used in the data processing system according to the present invention.
Fig. 3 is a schematic illustration showing recorded contents of a data table recorded in a processing unit according to the present invention.
Fig. 4 is a schematic illustration showing recorded contents of a first program table recorded in a processing unit according to the present invention.
Fig. 5 is a schematic illustration showing recorded contents of a second program table recorded in a processing unit according to the present invention.
Fig. 6 is a flowchart showing an inventory information recording process of an access unit and the process unit provided in the data processing system according to the invention.
Fig. 7 is a flowchart showing a processing execution process of a processing program of a command unit, the access unit and the process unit provided in the data processing system according to the invention.
Fig. 8 is a flowchart showing a processing execution process of a processing program of the command unit, the access unit and the process unit provided in the data processing system according to the invention.
Fig. 9 is a schematic illustration showing a command fed from the command unit to the processing unit in the data processing system according to the invention.
Fig. 10 is a schematic illustration showing recorded contents of the data of the recording medium used in the data processing system according to the invention.
Figs. 11A, 11B and 11C are schematic illustrations showing the command, the contents of the respective tables and their relationship in the data processing system according to the invention.

### DESCRIPTION OF A MODE OF AN EMBODIMENT OF THE INVENTION

A mode of an embodiment of the invention will now be described with reference to the accompanying drawings.

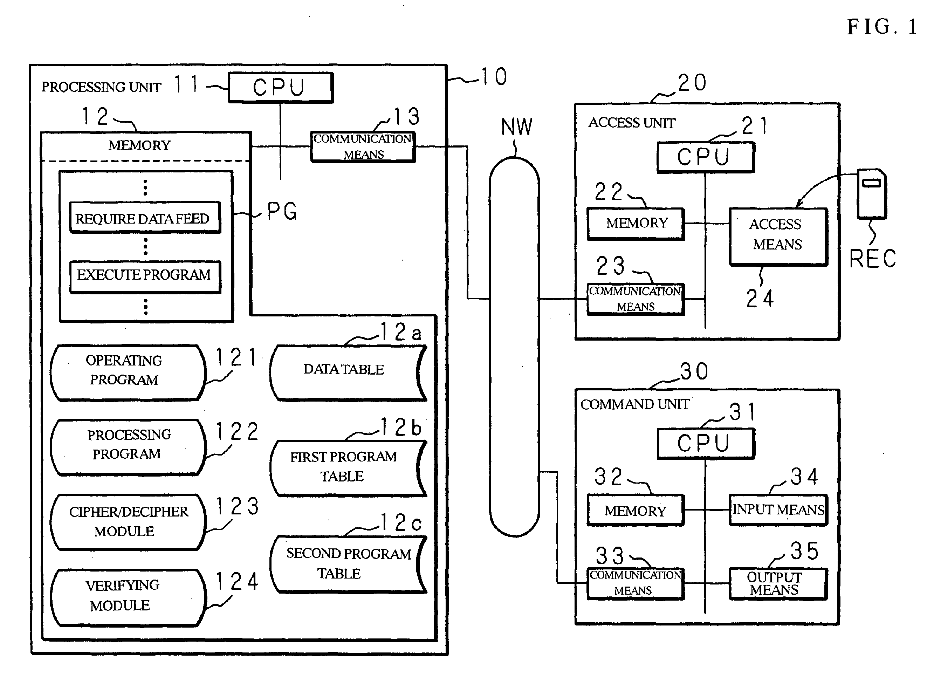

Fig. 1 is a block diagram showing a structure of a data processing system according to the present invention.

The data processing system according to the invention is a system mainly used in a data base system and provided with a processing unit 10 recording an applied program such as a processing program for processing data, an access unit 20 for accessing a recording media REC such as a memory card, a CD-ROM, a flexible disc or the like recording the data, and a command unit 30 for sending a command to the processing unit 10. The processing unit 10, the access unit 20 and the command unit 30 may communicate with each other through a communication network NW such as an LAN.

Incidentally, the data processing system shown in Fig. 1 illustrates a structure in which the processing unit 10, the access unit 20 and the command unit 30 are connected to the communication network NW composed of a ring-shaped topology one by one, respectively. However, it is possible to apply the invention to a communication network NW composed of various topology of bus-type, star-type and the like and also, each unit may be composed of a plurality of sub-units.

Furthermore, it is possible to use a unit that has functions corresponding to two or three of the processing unit 10, the access unit 20 and the command unit 30 such as a unit provided with both the functions of the processing unit 10 and the access unit 20.

The processing unit 10 is a unit using a server computer, and provided with a CPU 11 for controlling the overall unit, a memory 12 such as a hard disc, an RAM and the like for recording various kinds of information such as a computer program PG according to the present invention and a communication means 13 connected to the communication network NW

Then, the computer program PG according to the present invention recorded in the memory 12 is read out and executed by the CPU 11 so that the server computer operates the processing unit 10 according to the invention.

An operating program (OS) 121, various kinds of processing programs 122 that are applied programs operating on the operating program 121 for processing the data and a computer program PG according to the invention, which is one kind of the applied program operated on the operating program 121 are recorded in the memory 12 of the processing unit 10. A variety of kinds of computer programs such as a verification module 124 or the like for verifying and processing a data owner and a cipher/decipher module 123 for ciphering and deciphering the data are recorded in the memory 12 of the processing unit 10.

Furthermore, a part of the recording region of the memory 12 is used for a data table 12a for recording data identifying information for identifying the data and position information for indicating the recording positions of the data in correspondence with each other, a first program table 12b for recording the data identifying information of the data related to the processing of the processing program 122 in correspondence with the program identifying information for identifying the processing program 122 and a second program table 12c for recording a program in correspondence with the program identifying program information.

Incidentally, a variety of kinds of tables such as a table for indicating a person who provides the processing program 122 and a person who can use the program are recorded in the processing unit 10 in addition to the data table 12a, the first program table 12b and the second program table 12c.

The access unit 20 is provided with a CPU 21, a memory 22, a communication means 23 and an access means 24 for accessing a recording media REC such as a memory card, a CD-ROM, a flexible disc and the like and for recording/reading the data.

The command unit 30 is a unit using the client computer and is provided with a CPU 31, a memory 32, a communication means 33, an input means 34 such as a mouse and a keyboard, and an output means 35 such as a monitor and a printer.

A structure of the data recorded in the recording medium REC used in the data processing system according to the invention will now be described.

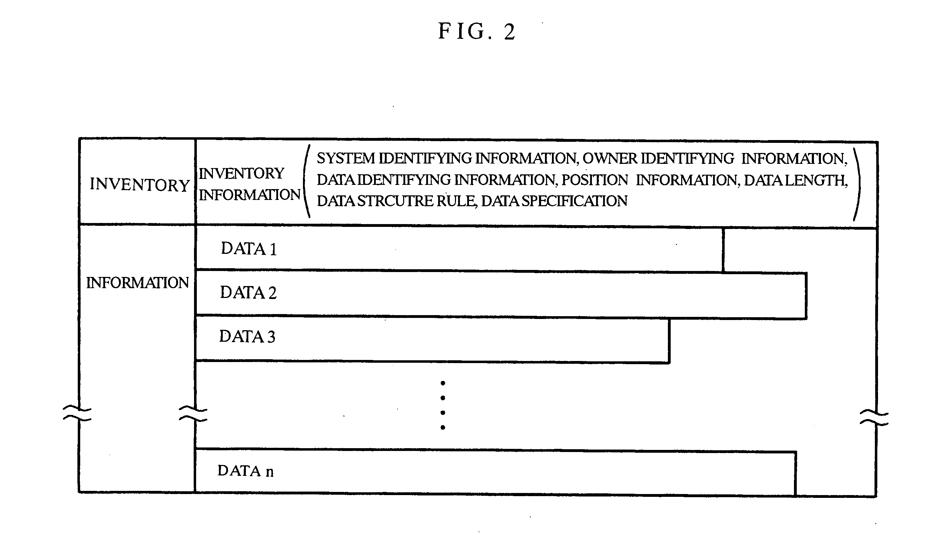

Fig. 2 is a schematic illustration showing recording contents of the data of the recording medium REC used in the data processing system according to the invention.

An attribute and data are recorded in an inventory portion and an information portion in the recording medium REC, respectively.

In the inventory portion, there is recorded system identifying information used in a judgment as to whether the recording medium REC may be used in the data processing system or not, an owner identifying information for identifying the owner of the data recorded in the information portion, position information for indicating the relative recording position of the data within the recording medium REC, and inventory information for indicating a rule of the data structure and the attribute of the data such as a specification of the data.

The data per se (data 1, data 2, data 3, ..., and data n) are recorded in the information portion.

The structure of the data recorded may be designed as desired and may be divided in detail to increase the flexibility of the processing program 122 and to contain the various information in the data to thereby make it possible to reduce the number of the sending/receiving times of the data and to reduce communication load.

Incidentally, a part of the inventory information of the data recorded in the inventory portion and the data recorded in the information portion are ciphered so that a bad conduct such as a leakage and false of the data and usage by malice may be prevented.

Also, the owner identifying information is not limited to the information for identifying the owner but may be information for identifying an cooperate, an entity, the recording medium REC and the access unit 20.

A structure of each table recorded in the processing unit 10 according to the invention will now be described.

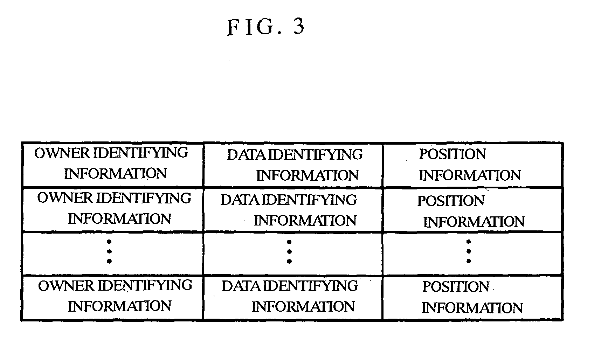

Fig. 3 is a schematic view showing the recording contents of the data table 12a recording in the processing unit 10 according to the invention.

The data table 12a is a table for recording the information relating to the data which may access in the data processing system.

The owner identifying information, the data identifying information, the position information or the like recorded in the recording medium REC is recorded as a record corresponding to each other in the data table 12a as shown in Fig. 3.

Incidentally, since it is necessary to identify the position of the data in the data processing system for the position information, not only the information indicating the relative position within the recording medium REC but also the information indicating the position of the access unit 20 accessing the recording medium REC is recorded.

The record recorded in the data table 12a is formed if the data is accessible but is deleted if the data is not accessible.

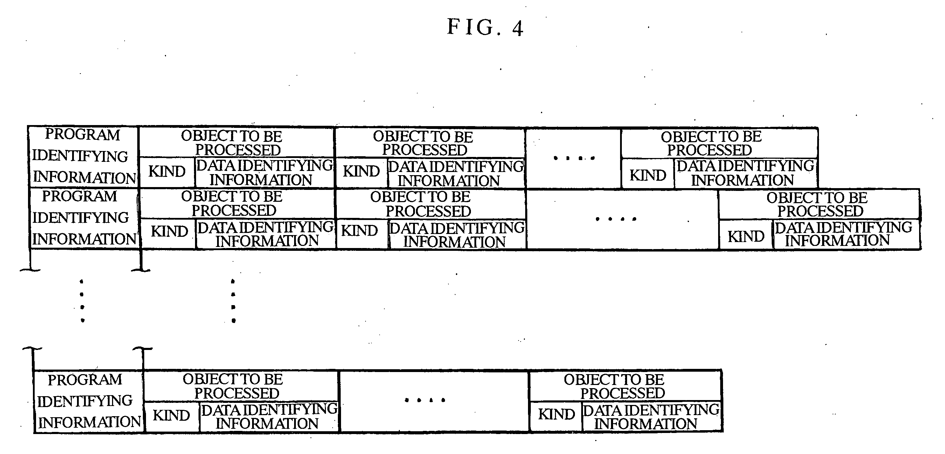

Fig. 4 is a schematic view showing the recording contents of the first program table 12b recorded in the processing unit 10 according to the invention.

The data identifying information of the data relating to the processing program 122 identified by the program identifying information are recorded in the first program table 12b as an object to be processed corresponding to the program identifying program for identifying the processing program 122.

The object to be processed means an item for recording the kind of the data and the data identifying information corresponding to each other. As the kinds, there are recorded the input data to be processed by the processing program 122, the output data that are obtained as a result of the execution of the processing program 122, parameters to be used in the process of the processing program 122 or on a way of the process of the processing program 122 and the information such as accessible right person.

Namely, the first program table 12b is a table for recording the kinds and the data identifying information as a record corresponding to the program identifying information.

Not only the data identifying information of the input data but also the the data identifying information to be assigned to the output data are limited by the first program table 12b. Also, the number of data relating to the process of the respective processing program 122 may be set as desired.

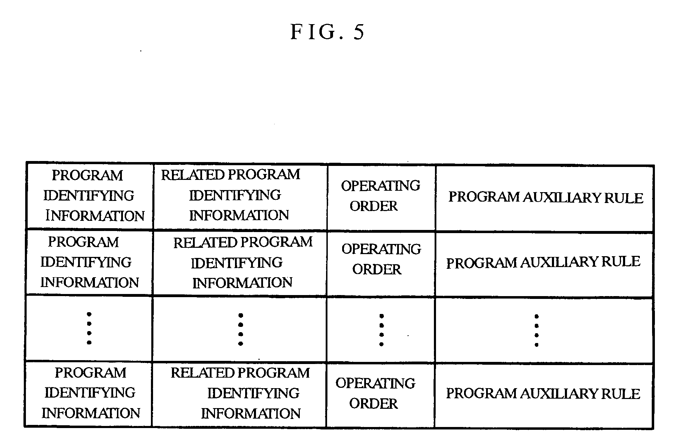

Fig. 5 is a schematic view showing the recording contents of the second program table 12c recording in the processing unit 10 according to the invention.

In correspondence with the program identifying information, related program identifying information for identifying the related program to be executed in relation with the program identifying information, an operating order (algorism) that is a substantial element of the processing program 122, and information for indicating the program auxiliary rule that is an explanation of the specification of the processing program 122 are recorded as a record of each program identifying information unit in the second program table 12c.

The related program means an applied program to be executed before the execution of the single processing program 122 identified by the program identifying information of the record, and more particularly, means an applied program such as another processing program 122 for ruling the process of judgment of the presence/absence of the right for executing the single processing program 122 and judgment of the presence/absence of the right for accessing the data.

Incidentally, the applied program to be executed after or simultaneously with the execution of the process program 122 identified by the program identifying information of the record may be shown as the related program. Furthermore, it is possible to designate the function of the basic program 121 as the related program.

Not only the operating order as the substantial element of the processing program 122 but also the notifying method of the processed result to the data owner are ruled in the operating order.

It is possible not only to show the method to be executed such as a hard copy, printing, reserving a file and the like but also to rule a method by which the execution is to be limited as the notifying method of the processed result.

The information indicating the program auxiliary rule is referred to when, for example, the provider of the processing program 122 and the owner of the data who desire the utilization of the function of the data process system according to the present invention understand the contents of the processing process 122.

In particular, in the data processing system according to the invention, since the data that need the security such as individual information or the like are recorded in the record medium REC, with respect to the second program table 12c recorded in the processing unit 10, the problem on the security would hardly take place even if the information would be available on public. Accordingly, it is preferable that the specification explanation of the processing program 122 recorded as the auxiliary rule is positively laid open and the utility is enhanced when the processing program 122 is to be executed.

The process of each unit provided in the data processing system according to the invention will now be described.

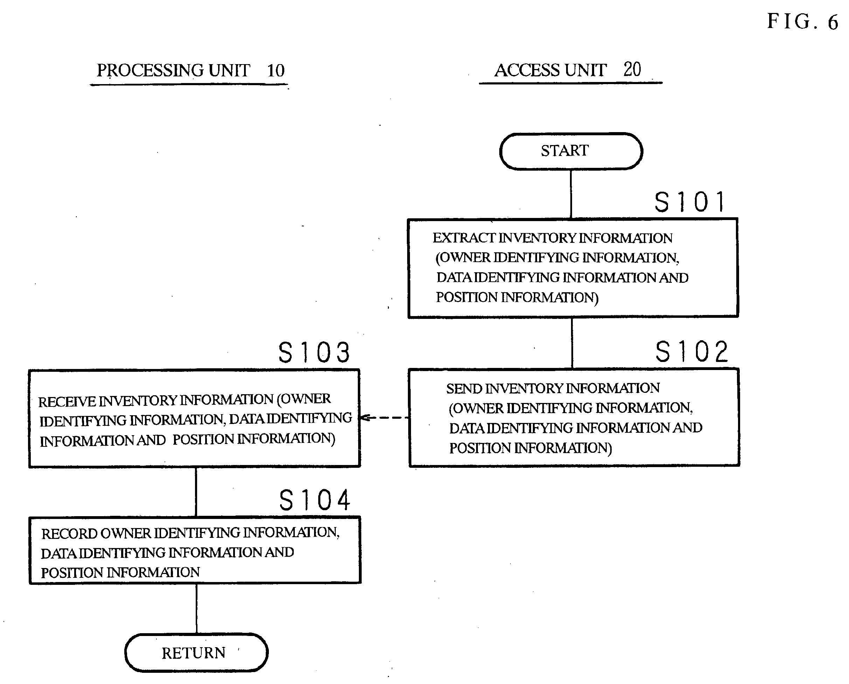

Fig. 6 is a flowchart showing the inventory information recording process of the processing unit 10 and the access unit 20 provided in the data processing system according to the invention.

First of all, the data owner loads the owned recording medium REC onto the access means 24 of the access unit 20. In the access unit 20 on which the recording medium REC has been loaded, the system identifying information recorded in the recording medium REC is read out so that the enablement/impossibility of use is judged on the basis of the read system identifying information.

The enablement/impossibility of use means the reference to the system identifying information recorded in the recording medium REC the system identifying information set in advance in the access unit 20 or the processing unit 10. As a result of the reference, in the case where the system identifying information set in the access unit 20 or the processing unit 10 is identified with the system identifying information recorded in the recording medium REC, the process onward is to be executed, and in the case of non-identification, the recording medium REC that has been loaded is to be discharged from the access unit 20 so that the process onward will not be executed.

Then, the system identifier is confirmed. In the access unit 20 judging that the recording medium REC may be used by the data processing system, the inventory information containing the position information and the data identifying information and the owner identifying information recorded in the loaded recording medium REC are extracted on the basis of the control of the CPU 21 (S101), and the inventory information containing the position information, the data identifying information and the owner identifying information extracted is fed from the communication means 23 through the communication network NW to the processing unit 10 (S102).

In the processing unit 10, on the basis of the control of the CPU 11, the inventory information containing the owner identifying information, the data identifying information and the position information is received (S103) and the owner identifying information, the data identifying information and the position information contained in the received inventory information is recorded in the data table 12a as a new record corresponding to each other (S104).

Incidentally, in the case where the position information fed from the access unit 20 is the information indicating the relative position within the recording medium REC, the position information in combination with the information such as a network pass for identifying the access unit 20 and an IP address is recorded in the data table 12a.

In the step S104, the record newly recorded within the data table 12a is to be deleted in the case where the access to the recording medium REC is impossible as in the case where the recording medium REC is ejected from the access unit 20.

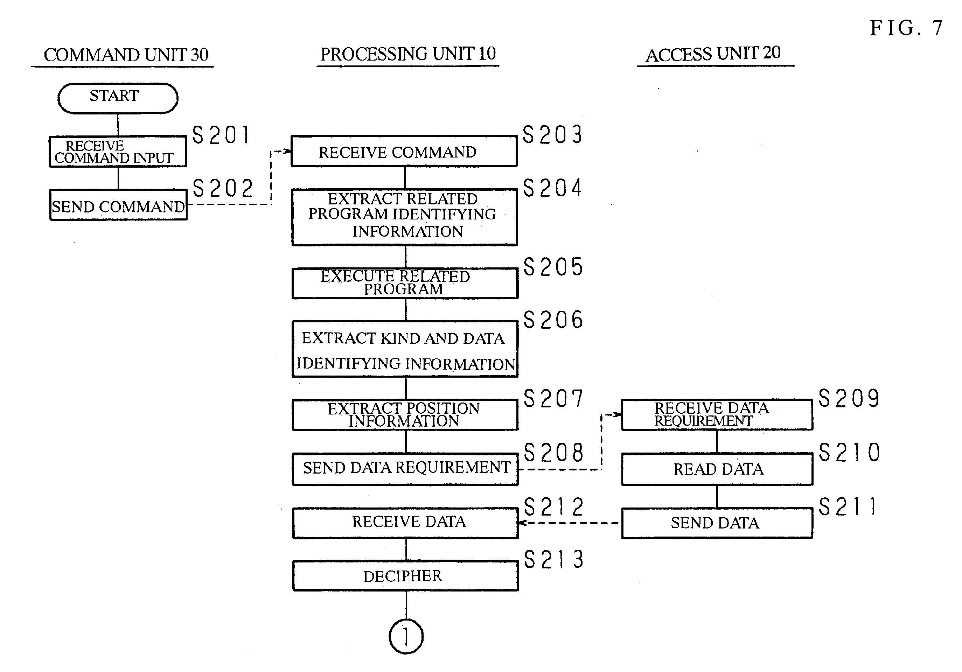

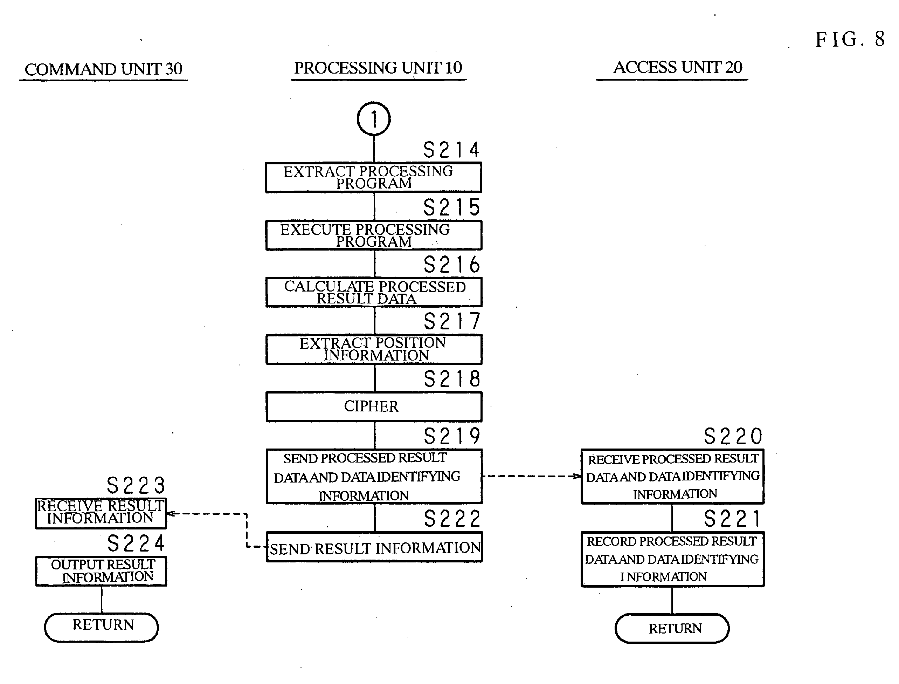

Figs. 7 and 8 are flowcharts showing the processing execution process of the processing program of the processing unit 10, the access unit 20 and the command unit 30 provided in the data processing system according to the invention.

In the case where the data owner or the processing person for performing the process of the data owned by the data owner desires to process the data, he or she operates the command unit 30 to input the command for processing the data.

In the command unit 30, on the basis of the control of the CPU 31, the input of the command is received (S201), and the received command is fed to the processing unit 10 (S202).

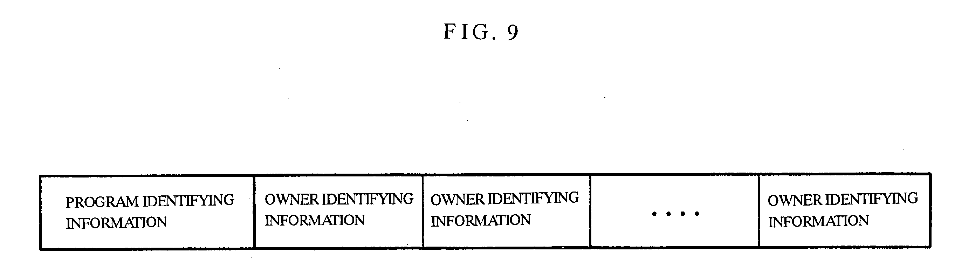

Fig. 9 is a schematic illustration showing the command fed from the command unit 30 to the processing unit 10 in the data processing system according to the invention.

The command fed from the command unit 30 to the processing unit 10 in the step S202 as shown in Fig. 9 means an electro-literal information showing the owner identifying information and the program identifying information.

The program identifying information contained in the command indicates the processing program 122 to be executed in accordance with the command.

The same number of pieces of owner identifying information as that of data to be used in the processing program 122, i.e., the number of pieces of data identifying information recorded as the processed object in the first program table 12b is contained in the command, and the order of the owner identifying information contained in the command and the order of the data identifying information recorded as the processed object in the first program table 12 are kept in corresponding relation.

Turning back to the flowchart, the command fed from the command unit 30 is received on the basis of the control of the CPU 11 in the processing unit 10 (S203), and the related program identifying information caused to correspond to the program identifying information contained in the received command is extracted from the second program table 12c (S204) to execute the related program that is the processing program 122 identified by the extracted related program identifying information (S205).

The related program executed in the step S205 means a computer program for judging the absence/presence of a right for executing the process program 122 identified by the program identifying information contained in the command and for judging the necessity/unnecessity of the limit to the execution of the corresponding processing program 122. The related program is executed to perform the verification of a person by a method such as a password and a bio-verification of a person who operates the command unit 30 in addition to a process for verifying the command unit 30 in which the verifying module 124 is driven, for example.

Also, in the processing unit 10, if necessary, the information to be used in the verification to the access unit 20 is required, in the access unit 20, the loaded recording medium REC is accessed and the information for the verification recorded in the recording medium REC is fed to the processing unit 10.

The related program for judging the right person recorded in the designated recording medium REC is used to make it possible for the data owner for controlling the recording medium REC to readily set the access limit and to increase the flexibility relating to the utilization of the system.

Also, the recording medium REC designated at this time may not necessarily mean the recording medium REC loaded on the access unit 20 by the data owner but may means the recording medium REC loaded on another access unit 20 by another person controlling the access right.

Incidentally, in the case where the related program is executed, so that it is judged that the person has no right to execute the processing program 122, a predetermined abnormal process is executed and the limit of the execution of the process program 122, for example, the process for interrupting the execution is performed.

In the processing unit 10, on the basis of the control of the CPU 11, the kind and data identifying information caused to correspond as the processed object to the program identifying information contained in the received command is extracted from the first program table 12b (S206) and on the basis of the kind and data identifying information extracted as the processed object and the owner identifying information contained in the received command, the position information corresponding to the data identifying information and the owner identifying information is extracted from the data table 12a (S207).

The extraction on the basis of the kind and data identifying information and the owner identifying information of the step S207 means a process to cause the data identifying information recording in the first program table 12b and the owner identifying information contained in the command with each other in order, searching the record whose data identifying information and owner identifying information is identified in the record recorded in the data table 12a by using as a key the respective data identifying information and owner identifying information caused to correspond to each other, and to extract the position information contained in the searched record. The same number of pieces of the position information as that of the data identifying information and owner identifying information caused to correspond to each other may be extracted.

Incidentally, since in this stage, it is the purpose to extract the position information of the input data that are the data to be processed in the process program 122, it is possible to extract only the position information corresponding to the data identifying information in which the kind is recorded as the input data.

Thus, only in the case where the owner identifying information and the data identifying information recorded in the data table 12a, the program identifying information and the data identifying information recorded in the first program table 12b and the program identifying information and the owner identifying information contained in the command are all prepared, the data recording position may be identified to process the data recorded in the identified recording position. Accordingly, it is possible to enhance the security and reliability of the data.

Then, the processing unit 10, on the basis of the control of the CPU 11, the data requirement for requiring the feed of the data recorded in the recording position indicated by the extracted position information is fed to the access unit 20 (S208).

In the access unit 20, on the basis of the control of the CPU 21, the received data requirement is received from the processing unit 10 (S209), the data are read from the recording medium REC on the basis of the received data requirement (S210) and the read data are fed to the processing unit 10 (S211).

Incidentally, the data read from the recording medium REC and to be fed to the processing unit 10 are ciphered.

The data requirement is fed in order to require a plurality of data corresponding to the extracted position information. In the case where the necessary of data are recorded over a plurality of recording media REC, the data requirement is fed to the plurality of access units 20 loading the respective recording media REC.

In the processing unit 10, on the basis of the control of the CPU 11, the data are received from the access unit 10 (S212), and the received data are deciphered by a cipher/decipher module 123 (S213).

Then, in the processing unit 10, on the basis of the control of the CPU 11, the processing program 122 caused to correspond to the program identifying information contained in the command received in the step S203 and identified by the program identifying information is extracted from the second program table 12c (S214), the extracted processing program 122 is executed, the data received from the access unit 20 are processed (S215) to calculate the data that become the result of the process (S216).

The processing program extracted from the second program table 12c in the step S214 means the substance of the processing program 122 recorded in the second program table 12c as the operating order (algorism).

The data identifying information is assigned in advance in the data that become the result of the process calculated in the step S216, and the data identifying information to be assigned is recorded in the first program table 12b as the data identifying information of the data in which the kind is the output data.

Then, in the processing unit 10, on the basis of the control of the CPU 11, the corresponding position information is extracted from the data table 12a on the basis of the data identifying information assigned to the data that are the result of the execution of the processing program 122 and the owner identifying information contained in the command received in the step S203 (S217).

Furthermore, in the processing unit 10, on the basis of the control of the CPU 11, the data as a result of the execution of the processing program 122 are ciphered by the cipher/decipher module 123 (S218), and the ciphered data and the data identifying information to be assigned to the data are fed to the access unit 20 to be recorded in the recording position indicated by the position information (S219).

In the access unit 20, on the basis of the control of the CPU 21, the data identifying information and the data ciphered with the data that are the result of the execution of the processing program 122 are received (S220) and the received data and the data identifying information is recorded in the recording medium REC on the basis of the position information (S221).

In the processing unit 10, on the basis of the control of the CPU 11, the information indicating the result of the execution of the processing program 122 is fed to the command unit 30 (S222).

In the command unit 30, on the basis of the control of the CPU 31, the information indicating the result of the execution of the processing program 122 is received (S223) and the information indicating the result of the receipt is outputted from the output means 35 (S224).

Thus, the processing program execution and processing have been performed.

An example for controlling the examination information of the data owner will now be described as an embodiment of the data processing system according to the present invention.

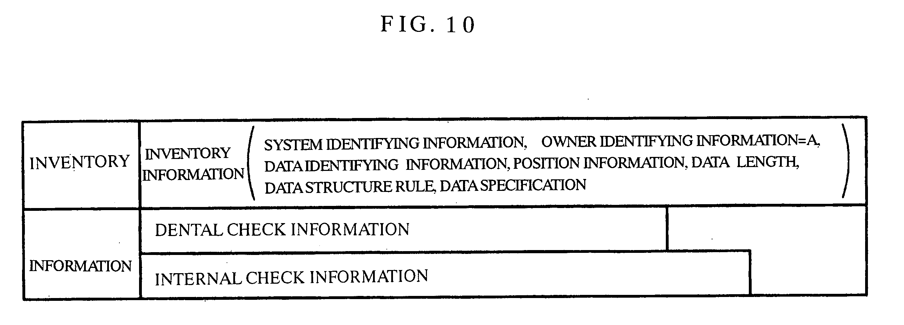

Fig. 10 is a schematic illustration showing the recorded contents of the data of the recording medium REC used in the data processing system according to the invention.

As shown in Fig. 10, in this embodiment, the owner identifying information of the inventory portion is indicated by "A" representing the data owner, and dental check information and internal check information is indicated as the data in the information portion.

The data owner loads the recording medium REC onto the access unit 20 installed in, for example, a hospital to thereby feed the inventory information to the processing unit 10 and to record the inventory information as a new record in the data table 12a of the processing unit 10.

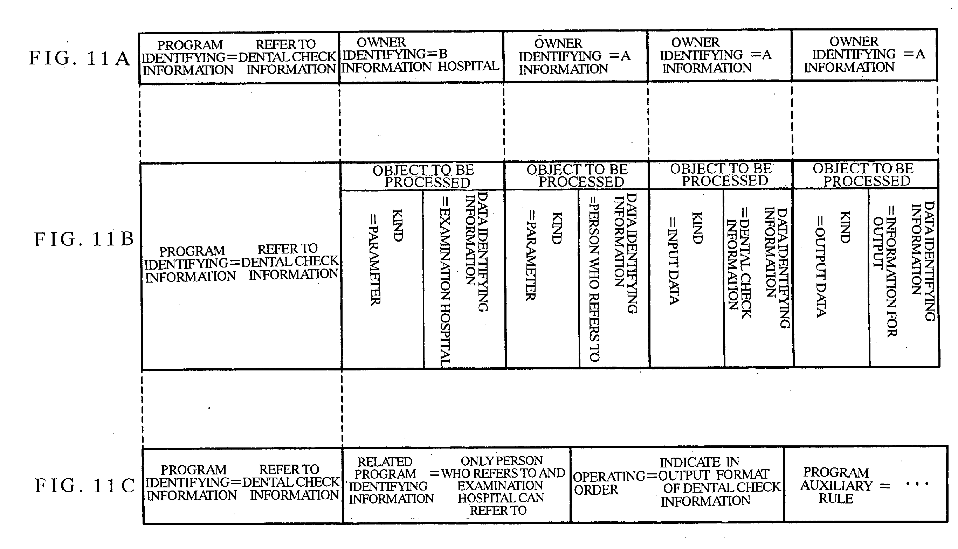

Figs. 11A, 11B and 11C are schematic views showing the command in the data processing system according to the invention and the contents of the various tables and their relationship.

Fig. 11A shows the command to be fed from the command unit 30 to the processing unit 10, in which the information for identifying the processing program 122 for recording the referenced information as the history, while referring to the dental check information that is referred to as "refer to dental check information" as the program identifying information, and data indicating "B hospital", "A", "A" and "A" in order are shown as the owner identifying information.

Fig. 11B shows the record in which the program identifying information is the "refer to dental check information" in the first program table 12b.

A processed object where the kind is the "parameter" and the data identifying information is the "hospital of examination", a processed object where the kind is the "parameter" and the data identifying information is the "person referring to", a processed object where the kind is the "input data" and the data identifying information is the "dental check information" and a processed object where the kind is the "output data" and the data identifying information is the "output information" are recorded in this order in the record. The processed objects recorded correspond, in order, to the owner identifying information shown in the command.

Fig. 11C shows the record in which the program identifying information is the "refer to dental check information" in the second program table 12c.

The information for identifying the related program for judging the presence/absence of the right for executing the processing program 122 of the "only person who refers to and hospital of examination may refer to" is recorded in the record as the related program identifying information. An algorism of the processing program 122 for "indicating the dental check information while reforming it in an output manner" is recorded as its operating order.

Incidentally, although the items of the program auxiliary rule of the record are omitted for the sake of the paper surface place in the drawing, such a description of the processing program 122 is recorded that "the data of the person, who refers to, that are shown in the second item as the parameter while being examined in the hospital of examination indicated in the first item as the parameter from the dental check information recorded in the recording medium REC owned by the owner shown in the third item is read out, the read dental check information is indicated in the command unit 30 while reforming it in the output format, and furthermore, the historical record of the information indicated as the output information in the recording medium REC owned by the owner indicated in the fourth item is recorded".

Namely, the processing program 122 means the process in which the data indicated by the data identifying information from the recording medium REC of the owner shown in the owner identifying information are read out (third input data) and after the predetermined process, the data identifying information is assigned and recorded in the recording medium REC of the owner shown in the owner identifying information (fourth output data). The hospital of examination and the parameter of the person, who refers to, are set as the terms when the data are to be read out.

The data owner or the person who is in charge of the case in the hospital operates the command unit 30 and sends the command shown in Fig. 11A to the processing unit 10.

In the processing unit 10, on the basis of the program identifying information indicated in accordance with the received command, the related program identified in accordance with the related program identifying information recorded in the second program table 12c shown in Fig. 11C is executed.

The related program executed in this case is a program for judging whether the original commander is the person who refers to or the hospital of examination. In the case where it is verified that the original commander is the person who refers to or the hospital of examination in accordance with the related program, the execution of the processing program 122 is allowed as the operating order recorded in the second program table 12c.

Also, in the judgment of the person who refers to, the command and the information indicated in the second item of the second program table 12c is used as a basic factor. In the example shown in Figs. 11A to 11C, since "A" is the "person who refers to", if it is verified that the person sending the command is the "A", the execution of the processing program 122 is allowed.

The processing program 122 is executed so that the process for reading the "dental check information of A" where the hospital of examination is the B hospital in the "dental check information" data recorded in the recording medium REC of "A" is performed.

In this case, the recording position of the data to be read from the owner identifying information and data identifying information recorded in Figs. 11A and 11B, respectively, and the position information and the data identifying information recorded in the data table 12a are identified.

Then, the data read from the recording medium REC and fed to the processing unit 10 are "shown while the dental check information is reformed in the output format". Also, the data are recorded in the recording region within the recording medium REC of "A" corresponding to the data identifying information in the dental check information having the output format shown.

In the mode of the embodiment, the recording medium that may be ejected away from the access unit such as a memory card, a CD-ROM or the like is shown. However, the present invention is not limited thereto but a recording medium such as a hard disc integrated with the access unit may be used as the recording medium for recording the data.

As described above in detail, in the data processing system, the processing apparatus and the computer program according to the invention, a processing unit for recording an applied program, an access unit for accessing a recording medium recording data, and a command unit for sending a command for processing the data are independent of each other, if the recording medium may be accessed from the access unit, information such as position information for indicating the recording position of the data is sent from the access unit to the processing unit, a command including a program identifying information for identifying the applied program is sent from the command unit to the processing unit, the data recorded in the recording position indicated by the position information are extracted on the basis of the command received in the processing unit and are processed by an applied program identified by a program identifying information with, for example, such an excellent effect that the data are controlled by a data owner for controlling the recording medium whereby security of the data is enhanced, an increase of running cost due to the increase of the data is prevented, and a mutual dependency on the applied program and the data is low to thereby suppress development cost to facilitate another use of the applied program.

Also, according to the present invention, since the data having the security such as individual information are not recorded in the processing unit, there is no possibility of leakage of the data. Thus, it is possible that the applied program is laid open. Accordingly, it is possible to enhance the reuse and circulation of the applied program so that further excellent processing program may readily be achieved. Additionally, the owner of the data may confirm a result of the process of his or her own data to thereby make it possible to enhance transparency of the use of the data. Thus, according to the present invention, it is possible to ensure such excellent effect.

Furthermore, according to the present invention, since the data readout is possible only when the recording medium is loaded on the access unit, it is possible to ensure, for example, such an excellent effect that the leakage, false and wanton use may be prevented.

Then, by using a related program for judging whether or not a person has an accessible right to the data recorded in the designated recording medium and performing the setup of the accessible right person by the command or the like whereby the data owner for controlling the recording medium may set the accessible right in an easy way to thereby make it possible to enhance the flexibility relating to the use of the system.

## Claims

1. A data processing system for executing a program on the basis of a command and processing data, comprising:
a command unit for sending the command;
a processing unit for recording a program; and
an access unit for accessing a recording medium recording the data,
wherein said access unit includes means for sending to said processing unit position information indicating a recording position of the data recorded in the recording medium,
said command unit includes means for sending to said processing unit a command including program identifying information for identifying the program, and
said processing unit includes:
means for requiring a feed of the data caused, in advance, to correspond to the program identifying information included in the command received from said command unit and recorded in the recording position indicated by the position information received from said access unit; and
means for executing the program identified by the program identifying information included in the command received from the command unit and processing the data received as required.

2. A data processing system for executing a program on the basis of a command and processing data, comprising:
a command unit for sending the command;
a processing unit for recording a program; and
an access unit for accessing a recording medium recording the data,
wherein said access unit includes means for sending to said processing unit inventory information including data identifying information for identifying and position information indicating a recording position of the data recorded in the recording medium,
said command unit includes means for sending to said processing unit a command including program identifying information for identifying the program and information used for identifying the data,
said processing unit includes:
a data table for recording the data identifying information and the position information caused to correspond to each other;
a first program table for recording the data identifying information of the data related to the process of the program in association with the program identifying information;
a second program table for recording the program in association with the program identifying information;
means for recording to said data table the position information and the data identifying information included in the inventory information received from said access unit;
means for extracting from the data table the position information corresponding to the information used for identifying the data and the data identifying information on the basis of the information used for identifying the data included in the command and the data identifying information recorded to the first program table in associated with the program identifying information included in the command received from said command unit; and
means for sending to said access unit data requirement for requiring a feed of the data recorded in the recording position indicated by the extracted position information,
said access unit further includes:
means for reading the data from the recording medium on the basis of the data requirement received; and
means for sending the read data to said processing unit, and
said processing unit further includes:
means for extracting from the second program table the program identified by the program identifying information included in the command received from said command unit; and
means for executing the extracted program and processing the data received from said access unit.

3. The data processing system according to claim 2, wherein the inventory information sent from said access unit includes an owner identifying information for identifying an owner of the data,
the information used for identifying the data included in the command sent from said command unit is an owner identifying information, and
the position information, the data identifying information and the owner identifying information included in the inventory information is recorded on said data table.

4. The data processing system according to claim 2 or 3, wherein the data identifying information to be assigned to the data that are a result from the execution of the program is recorded in said first program table in correspondence with the program identifying information,
said processing unit further includes means for sending to said access unit the data that are the result of the execution of the program and the data identifying information to be assigned to the data on the basis of the first program table, and
said access unit further includes means for recording the received data and the data identifying information to the recording medium.

5. The data processing system according to claim 2 or 3, wherein a related program identifying information for identifying a related program to be executed in relation with the program is recorded in the second program table in correspondence with the program identifying information and the program, and
the related program is a program for judging the absence/presence of the limit of the execution of the corresponding program.

6. The data processing system according to claim 4, wherein a related program identifying information for identifying a related program to be executed in relation with the program is recorded in the second program table in correspondence with the program identifying infromation and the program, and
the related program is a program for judging the absence/presence of the limit of the execution of the corresponding program.

7. The data processing system according to any one of claims 1 to 3, wherein the data recorded to the recording medium are ciphered data and
said processing unit further includes:
means for ciphering the data; and
means for deciphering the ciphered data.

8. The data processing system according to claim 4, wherein the data recorded to the recording medium are ciphered data and
said processing unit further includes:
means for ciphering the data; and
means for deciphering the ciphered data.

9. The data processing system according to claim 5, wherein the data recorded to the recording medium are ciphered data and
said processing unit further includes:
means for ciphering the data; and
means for deciphering the ciphered data.

10. The data processing system according to claim 6, wherein the data recorded to the recording medium are ciphered data and
said processing unit further includes:
means for ciphering the data; and
means for deciphering the ciphered data.

11. A data processing apparatus for executing a program on the basis of a command and processing data, provided with means for communicating with another apparatus, comprising:
means for receiving position information for indicating a recording position of the data;
means for receiving a command including program identifying information for identifying the program;
means for requiring a feed of the data caused, in advance, to correspond to the program identifying information included in the command received and recorded in the recording position indicated by the position information received; and
means for executing the program identified by the program identifying information included in the command received and processing the data received as required.

12. A computer program for executing a program on the basis of a command and processing data, for a computer provided with means for communicating with another apparatus, comprising the following steps:
if position information indicating a recording position of the data is received and furthermore, the command including program identifying information for identifying the program is received to the computer,
requiring a feed of the data caused, in advance, to correspond to the program identifying information included in the command received and recorded in the recording position indicated by the position information received; and
executing the program identified by the program identifying information included in the command received and processing the data received as required.
